# EUROPÄISCHE PATENTSCHRIFT

(11) **EP 1 572 479 B1**
(45) Veröffentlichungstag und Bekanntmachung des Hinweises auf die Patenterteilung: **14.06.2006**
(21) Anmeldenummer: 03810840.3
(22) Anmeldetag: 08.11.2003
(51) Int. Cl.: B60H 1/00, F25B 5/04

(54) **KLIMAANLAGE, INSBESONDERE FÜR KRAFTFAHRZEUGE**
AIR CONDITIONING INSTALLATION, ESPECIALLY FOR MOTOR VEHICLES
INSTALLATION DE CLIMATISATION CON NUE EN PARTICULIER POUR DES VEHICULES AUTOMOBILES

(30) Priorität: 16.12.2002 DE 10258618
(43) Veröffentlichungstag der Anmeldung: 14.09.2005
(73) Patentinhaber: DaimlerChrysler AG, 70567 Stuttgart (DE)
(72) Erfinder: HARM, Klaus, 70597 Stuttgart (DE)
(86) Internationale Anmeldenummer: PCT/EP2003/012487
(87) Internationale Veröffentlichungsnummer: WO 2004/054827

(56) Entgegenhaltungen:
- DE-A- 3 704 182
- DE-A- 10 140 630
- DE-A- 10 308 542
- US-A- 2 185 022

## Beschreibung

Die Erfindung betrifft eine Klimaanlage, insbesondere für Kraftfahrzeuge gemäß dem Oberbegriff von Anspruch 1.

Eine gattungsgemäße Klimaanlage ist aus der DE 37 04 182 A1 bekannt. Darin wird eine Kühlanlage in Verbindung mit einem Kältespeicher betrieben, wobei das Kältemittel als Wärmeträgermittel zur Übertragung der Kälte mit Hilfe einer Umwälzpumpe vom Kältespeicher zum Verdampfer genutzt wird. Verdampfer und Kältespeicher sind kältemittelseitig parallel geschaltet, was zu einem hohen Verschaltungs- und Komponentenaufwand und damit nachteilig zu hohen Fertigungskosten führt. Des weiteren verschlingt eine derartige Anlage selbstverständlich auch wertvollen Bauraum in einem Kraftfahrzeug, insbesondere in einem Personenkraftwagen.

Konventionelle Kälteanlagen in Fahrzeugen werden im Regelfall nur durch einen Kältemittelverdichter angetrieben, der über einen Riemenantrieb fest mit dem Fahrzeugmotor verbunden ist. Steht der Motor, steht damit auch die Klimaanlage. Im Sommer kann sich die Fahrgastzelle sehr aufheizen. Die Konsequenz daraus ist, dass Fahrer auch im Stau oder bei Wartezeiten den Motor laufen lassen, um die Klimaanlage in Betrieb zu halten. Dies ist eine Praxis die durch Schadstoff- und Geräuschemissionen die Umwelt stark belastet und zusätzlich Kraftstoff verbraucht.

Bei Fahrzeugen mit Start Stop-Funktion wird der Motor sobald das Fahrzeug steht automatisch ausgeschaltet (auch bei kürzeren Stopps, z.B. an einer roten Ampel), um den Kraftstoffverbrauch zu reduzieren. Demzufolge fällt ebenfalls die Kälteanlage aus, so dass keine komfort- und sicherheitsrelevanten Funktionen wie Kühlung und Trocknung der Zuluft für die Fahrgastzelle erfüllt werden können.

Im Bereich der Nutzfahrzeuge haben Standklimaanlagen in der Serienproduktion bereits Einzug gehalten. Dieser Standard ist in der PKW-Klimatisierung noch lange nicht erreicht. Für einen Einsatz in Personenkraftwagen sind die bestehenden Konzepte aufgrund der Verhältnisse von Leistung zu Bauraum und Gewicht noch nicht geeignet.

Aus der Praxis bekannt sind Standklimatisierungskonzepte mit in der Regel indirekt beladenen Speicherverdampfern, die eine schlechte Abkühldynamik aufweisen und nur eine Kühlung direkt nach dem Motorstop bewirken.

Des weiteren sind elektrisch angetriebene Verdichter bekannt, z.B. in Verbindung mit riemengetriebenem Startergenerator, integriertem Startergenerator oder als Hybridverdichter, d.h. als Verdichter mit integriertem Elektromotor. Hierfür sind jedoch in nachteilhafter Weise vergrößerte Batterien und Lichtmaschinen vonnöten. Im Standbetrieb hat das Fahrzeug dann einen hohen Energieverbrauch. Zudem ergibt sich aufgrund der sehr langen Wirkungsgradkette (Lichtmaschine - Batterie - Kältemittelverdichter) eine sehr schlechte Effizienz.

Ebenfalls bekannt sind Kälteanlagen mit sekundärem Kühlmittelkreislauf und einem Thermospeicher im Sekundärkreislauf mit den Kältemitteln R744/CO₂. Nachteilig ist hier der relativ hohe Hardware-, Platz- und Gewichtsaufwand. Zusätzlich lässt sich nur eine begrenzte geringe thermische Dynamik realisieren. Zudem ergibt sich aufgrund der Wärmeübergänge vom Kältemittel zum Wärmeträgermedium und Wärmeträgermedium zur Nutzluft eine schlechte Effizienz.

Auch bekannt sind motorunabhängige Klimatisierungen für Fernverkehr-Nutzfahrzeuge. Hier erfolgt die Beladung eines Thermospeichers mit Kälte über einen Sekundärkreislauf mit den vorstehend erwähnten Nachteilen (Hardware-, Platz- und Gewichtsaufwand), wodurch diese Art der Standklimatisierung somit auch weniger für den Einsatz in Personenkraftwagen geeignet ist.

Der vorliegenden Erfindung liegt daher die Aufgabe zugrunde, eine Klimaanlage der eingangs erwähnten Art zu schaffen, die die Nachteile des Standes der Technik löst, insbesondere eine Standklimatisierungsfunktion mit Kühlung und Entfeuchtung der Nutzluft bei geringem Platz-, Bauteil-, Verschaltungs- und elektrischem Energieaufwand, insbesondere für den Einsatz in Personenkraftwagen schafft, wobei zusätzlich eine gute Abkühldynamik erzielt werden soll.

Diese Aufgabe wird erfindungsgemäß durch den kennzeichnenden Teil von Anspruch 1 gelöst.

Durch die erfindungsgemäßen Maßnahmen wird in einfacher und vorteilhafter Weise eine Klimaanlage mit Standklimatisierungsfunktion bei ausgeschaltetem Kompressionskältekreislauf geschaffen, bei der der Verschaltungs- und Komponentenaufwand - bedingt durch die strukturell einfache serielle Anordnung von Verdampfer und Thermospeicher kältemittelseitg bzw. im Kältemittelkreislauf - sehr gering ist. Demzufolge kann eine Klimatisierungsfunktion während der Stop-Phase des Fahrmotors mit geringem Packaging und Hardware-Aufwand realisiert werden. Des weiteren ist die erfindungsgemäße Klimaanlage auch zur Vor- und Standklimatisierung geeignet. Es wird eine bessere Abkühldynamik bei aufgeheiztem Fahrzeug und optional eine geringere Hochdruckspitze beim Anfahren der Kälteanlage bei geladenem Thermospeicher zur Verfügung gestellt. Des weiteren ist kein zusätzlicher Kühlkreislauf (Sekundärkühlkreislauf) erforderlich, was zusätzlichen Platz-, Bauteil- und elektrischen Energieaufwand vermeidet. Mit der erfindungsgemäßen Kreislaufschaltung, die im wesentlichen aus einer modifizierten Kälteanlage mit einem integriertem Thermospeicher besteht, kann auch bei ausgeschalteter Kälteanlage sehr gut klimatisiert werden. Im Kältemittelsammler vorhandenes Kältemittel dient als Wärmeträgermedium zur Übertragung der Kälte vom Thermospeicher zum Verdampfer. Da das Kältemittel die Energie latent überträgt und die Verdampfung und die Kondensation fast auf gleichem Druckniveau stattfindet, wird nur eine sehr geringe Pumpenleistung zur Aufrechterhaltung des Standklimatisierungskreislaufs benötigt. Durch eine optionale thermische Isolation des Thermospeichers kann auch nach längerem Motorstop eine Vorklimatisierung des Fahrzeugs bereitgestellt werden.

Die Erfindung eignet sich besonders für Kälteanlagen, bei denen sich der Kältemittelsammler im Saugbereich, d.h. vor oder nach dem Verdampfer befindet. Aus diesem Grund sind Kälteanlagen mit dem Kältemittel Kohlenstoffdioxid besonders geeignet, da sich der Kältemittelsammler hier in der Regel kältemittelhydraulisch hinter dem Verdampfer befindet.

Erfindungsgemäß kann ferner vorgesehen sein, dass der Kältemittelsammler im Standklimatisierungskreislauf bzw. nach dem Thermospeicher und vor der Umwälzpumpe bzw. dem Verdampfer angeordnet ist.

Dadurch wird eine Druckerhöhung im abgeschlossenen Standklimatisierungskreislauf minimiert, denn beim Umwälzen des Kältemittels im Standklimatisierungskreislauf tritt eine Druckerhöhung in der Anlage auf, sobald das flüssige Kältemittel in den Verdampfer eintritt und dort teilweise oder komplett verdampft. Diese Volumenerhöhung kann zu einer Druckerhöhung in der Anlage führen. Bekanntlich bestimmt das Kältemitteldruckniveau die Verdampfungstemperatur und je höher dieses Druckniveau ist, umso höher ist auch die Verdampfungstemperatur.

Darüber hinaus sorgt diese Position des Kältemittelsammlers dafür, dass die Umwälzpumpe im Standklimatisierungskreislauf somit nur zu 100% flüssiges Kältemittel aus dem Kältemittelsammler ansaugt und damit einwandfrei - ohne störende Geräusche durch Gasbläschen - arbeitet.

Vorteilhaft ist, wenn insbesondere bei mit Kälte beladenem Thermospeicher der Kompressionskältekreislauf und der Standklimatisierungskreislauf parallel betreibbar sind.

Dadurch kann bei beladenem Thermospeicher in vorteilhafter Weise eine hohe Abkühldynamik durch einfaches Zuschalten des Standklimatisierungskreislaufs bei laufendem Kompressionskältekreislauf erzielt werden.

Vorteilhafte Ausgestaltungen und Weiterbildungen der Erfindung ergeben sich aus den weiteren Unteransprüchen und aus den nachfolgend anhand der Zeichnung prinzipmäßig beschriebenen Ausführungsbeispielen.

Es zeigt:
- Fig. 1a: eine prinzipmäßige Kreislaufschaltung einer ersten Ausführungsform der erfindungsgemäßen Klimaanlage im AC-Betrieb;
- Fig. 1b: eine prinzipmäßige Kreislaufschaltung der erfindungsgemäßen Ausführungsform aus Fig. 1a im Standklimatisierungsbetrieb;
- Fig. 2: eine prinzipmäßige Kreislaufschaltung einer zweiten Ausführungsform der erfindungsgemäßen Klimaanlage im Standklimatisierungsbetrieb;
- Fig. 3: eine prinzipmäßige Kreislaufschaltung einer dritten Ausführungsform der erfindungsgemäßen Klimaanlage mit Bypass im AC-Betrieb;
- Fig. 4: eine prinzipmäßige Kreislaufschaltung einer vierten Ausführungsform der erfindungsgemäßen Klimaanlage mit einer separaten Anordnung eines Thermospeichers und eines Kältemittelsammlers im AC-Betrieb;
- Fig. 5a: eine prinzipmäßige Kreislaufschaltung einer fünften Ausführungsform der erfindungsgemäßen Klimaanlage unter Ausnutzung des Thermosyphoneffekts im Standklimatisierungsbetrieb;
- Fig. 5b: eine prinzipmäßige Kreislaufschaltung der fünften erfindungsgemäßen Ausführungsform gemäß Fig. 5a im AC-Betrieb;
- Fig. 6: eine prinzipmäßige Kreislaufschaltung einer sechsten Ausführungsform der erfindungsgemäßen Klimaanlage; und
- Fig. 7: ein prinzipmäßiges Druck-Enthalpie-Diagramm.

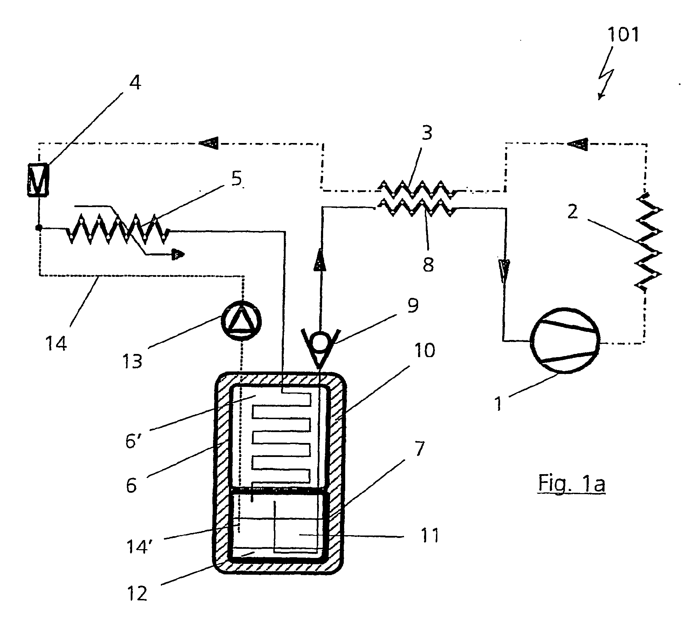

In Fig. 1a ist eine als Ganzes mit der Bezugsziffer 101 bezeichnete Klimaanlage im AC-Betrieb dargestellt. Bei laufendem Kompressionskreislauf (Hochdruckbereich punkt-gestrichelt und Saugbereich mit durchgezogener Linie dargestellt) wird ein Kältemittel 11 in einem Verdichter 1 auf ein hohes Temperatur- und Druckniveau gebracht, im Umgebungswärmetauscher 2 gekühlt, bevor es über einen inneren Wärmetauscher 3 weiter abgekühlt wird. Danach passiert es ein Expansionsventil 4 und wird auf ein tieferes Druck- und Temperaturniveau (10°C bis 0°C je nach Temperaturanforderung) entspannt. In einem Verdampfer 5 nimmt das Kältemittel 11 Energie aus der Nutzluft, die zum Innenraum (Fahrgastzelle - nicht dargestellt) geleitet wird auf, kühlt und trocknet diese und verdampft dabei teilweise oder komplett, bevor es zu einem Thermospeicher 6 gelangt. Im vorliegenden Ausführungsbeispiel befindet sich der Thermospeicher 6 kältemittelhydraulisch hinter dem Verdampfer 5 der Klimaanlage 101. Sofern das Kältemittel 11 kälter ist als das im Thermospeicher 6 befindliche Wärmespeichermedium 6', wird dieses mit Kälte beladen, bevor das Kältemittel 11 in einen Kältemittelsammler 7 gelangt. Vom Kältemittelsammler 7 strömt das Kältemittel 11 über die Niederdruckseite eines weiteren inneren Wärmetauschers 8, überhitzt dabei bevor es wieder zum Verdichter 1 gelangt.

Aus Platzgründen sollte das Wärmespeichermedium 6' im Thermospeicher 6 sinnvoller Weise eine Phasenumwandlung zwischen fester und flüssiger Phase erfahren, damit ein möglichst hohes volumetrisches Wärmespeichervermögen zustande kommt. Die Ein- und Auskopplung der Wärme erfolgt in diesem Fall vorwiegend latent, d.h. auf isothermem Niveau in Form von Schmelzwärme bei der Phasenumwandlung. In den auch nachfolgend beschriebenen Ausführungsbeispielen ist das Wärmespeichermedium als Parafin 6' ausgebildet. In anderen Ausführungsbeispielen könnten selbstverständlich auch unter anderem Alkohole oder Salzhydrate zum Einsatz kommen.

Im AC-Betrieb bzw. bei laufendem Kompressionskältekreislauf (Fig. 1a) wird der Thermospeicher 6 mit Kälte beladen.

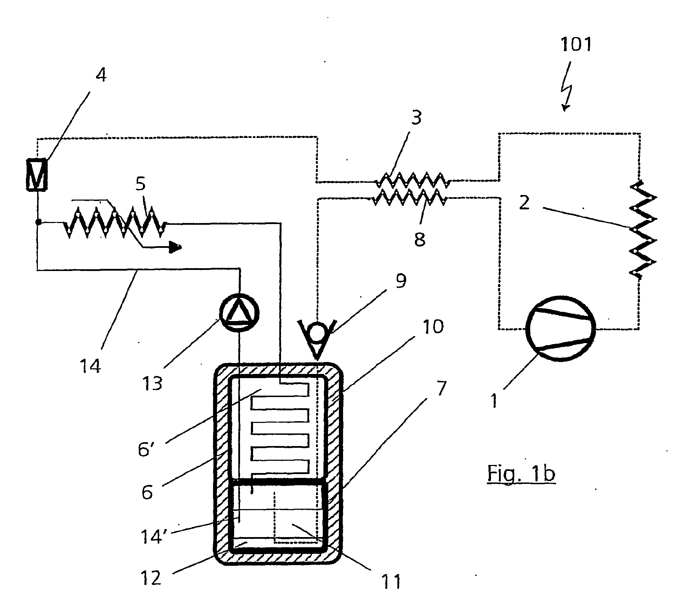

In Fig. 1b läuft die Klimaanlage 101 im Standklimatisierungsbetrieb, d.h. der Kompressionskältekreislauf ist abgeschaltet (gestrichelte Linien), während der Standklimatisierungskreislauf (durchgezogene Linien) aktiv ist. Der Standklimatisierungskreislauf kann bei mit Kälte beladenem Thermospeicher 6 zur Erzielung einer besseren Abkühldynamik auch parallel zum Kompressionskältekreislauf betrieben werden.

Wird der Verdichter 1 ausgeschaltet, so verhindert ein Rückschlagventil 9 und das geschlossene Expansionsventil 4, dass Kältemittel 11 aus dem Hochdruckbereich (in Fig. 1b gestrichelt dargestellt) in den Leistungsabschnitt des Standklimatisierungskreislaufs mit dem Verdampfer 5 und dem Kältemittelsammler 7 eindringt und damit den Kältemitteldruck ansteigen lässt. Die Standklimatisierung erfolgt nun über den Standklimatisierungskreislauf, in dem mit Hilfe einer Umwälzpumpe 13, flüssiges Kältemittel 11 aus dem Kältemittelsammler 7 über eine Kondensatleitung 14 zum Verdampfer 5 gefördert wird. Im Verdampfer 5 nimmt das Kältemittel 11 Energie aus der Nutzluft, kühlt und trocknet diese und verdampft dabei teilweise oder komplett, bevor es zum Thermospeicher 6 gelangt. Hier kondensiert das Kältemittel 11 und strömt in den Kältemittelsammler 7 hinein, von wo aus der Kreislauf von neuem beginnt. Der Thermospeicher 6 übernimmt demzufolge im Standklimatisierungskreislauf die Funktion eines Kondensators. Aufgrund der schlechten thermodynamischen Eigenschaften eines für den Verdichter 1 benötigten, im Kältemittelsammler 7 vorhandenen, Schmiermittels 12, sollte die Öffnung 14' der Kondensatleitung 14 nur so tief in den Kältemittelsammler 7 hineinragen, dass nur flüssiges Kältemittel 11 von der Umwälzpumpe 13 angesaugt wird. Dabei ist besonders auch auf den flüssigen Zustand des Kältemittels 11 zu achten, da beim Ansaugen von einem Gemisch aus gasförmigem und flüssigem Kältemittel 11 nicht die insgesamt verfügbare Enthalpiedifferenz des Kältemittels 11 (0 bis Überhitzung) ausgenutzt wird und Geräusche im Kreislauf aufgrund der Förderung von Gasblasen entstehen könnten. Im vorliegenden Ausführungsbeispiel ist der Kältemittelsammler 7 im Saugbereich, d.h. vor oder nach dem Verdampfer angeordnet, wodurch sich die beschriebene Klimaanlage 101 für einen Einsatz des umweltfreundlichen Kältemittels Kohlenstoffdioxid besonders eignet, da sich der Kältemittelsammler 7 in vorteilhafter Weise kältemittelhydraulisch nach dem Verdampfer 5 befindet. Dementsprechend wird auch in den vorliegenden Ausführungsbeispielen Kohlenstoffdioxid als Kältemittel 11 verwendet.

Da die Kondensation und Verdampfung sozusagen isobar abläuft und das Kältemittel die Wärme in der Regel fast ausschließlich latent überträgt, wird nur eine geringe Pumpenleistung der Umwälzpumpe 13 benötigt, um den Standklimatisierungskreislauf aufrecht zu erhalten. Durch eine thermische Isolation 10 des Thermospeichers 6 und des Kältemittelsammlers 7, kann die Kälteenergie über einen längeren Zeitraum gespeichert werden und zu einem späteren Zeitpunkt zur Vorklimatisierung der Nutzluft genutzt werden. Ein weiterer Vorteil der thermischen Isolation 10 ist ein wesentlich langsameres Verdampfen des flüssigen Kältemittels 11 bei ausgeschalteter, stark aufgeheizter Klimaanlage 101. Dadurch baut sich der Kältemitteldruck nicht so stark auf und es wird eine höhere Kälteleistung und ein geringerer Kältemittelhochdruck beim Anfahren der Klimaanlage 101 erzielt.

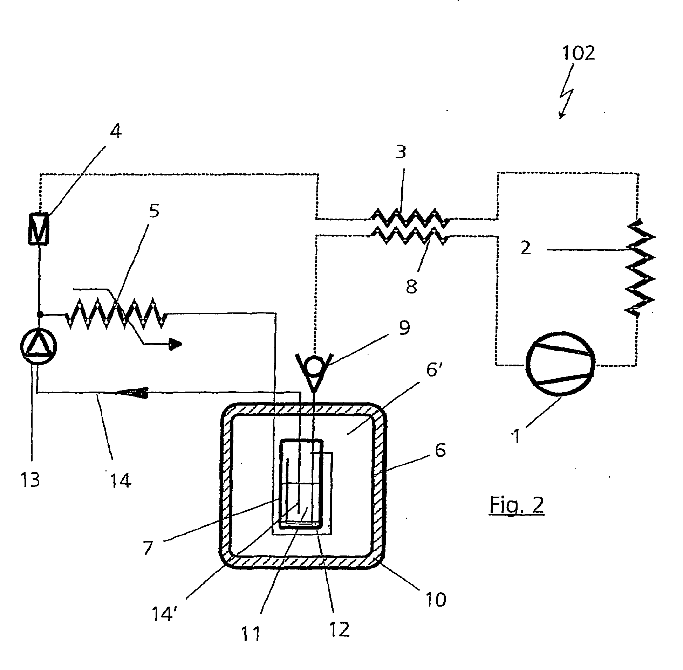

Zur Reduzierung der Verbindungs- und damit möglichen Leckagestellen im Kreislauf bietet es sich an, den Thermospeicher 6 und den Kältemittelsammler 7 gemäß den Figuren 1a, 1b und 2 zu integrieren. Des weiteren wäre es in einem anderen Ausführungsbeispiel ebenfalls denkbar die Umwälzpumpe 13 und/oder das Rückschlagventil 9 zur Reduzierung von Leckagestellen in den Thermospeicher 6 bzw. den Kältemittelsammler 7 aufzunehmen.

Fig. 2 zeigt eine Klimaanlage 102 mit einem Thermospeicher 6 mit großer Speicherkapazität, d.h. großem Volumen, der den Kältemittelsammler 7, der als Druckbehälter ausgeführt ist, umhüllt, um Material für den Behälter des Kältemittelsammlers 7 zu reduzieren.

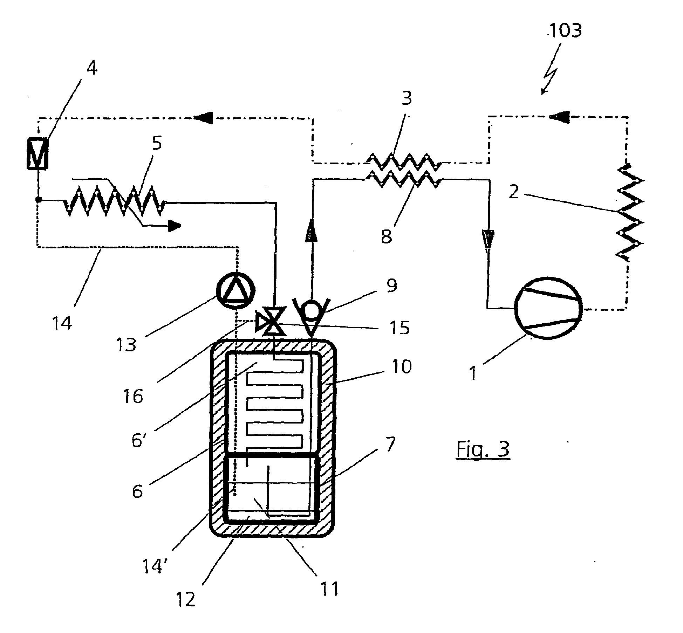

Fig. 3 zeigt eine Klimaanlage 103 bei der eine schnelle Abkühlung bei aufgeheiztem Innenraum erfolgen kann. Bei aufgeheiztem, d.h. entladenem Thermospeicher 6 entnimmt dieser beim Anfahren der Kälteanlage 103 einen Teil der Kälte und verschlechtert damit die Abkühlleistung am Verdampfer 5. Durch Einbinden eines Bypass-Ventils 15 mit einer BypassLeitung 16, kann der Thermospeicher 6 umgangen werden, wenn die gesamte Kälteleistung am Verdampfer 5 übertragen werden soll. Das Bypass-Ventil 15 kann wie vorliegend elektrisch oder aber auch thermostatisch angesteuert werden.

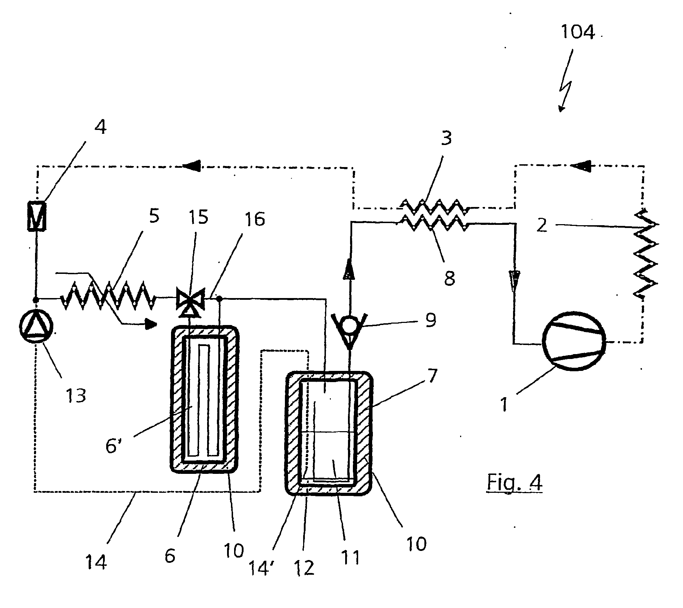

In Fig. 4 ist eine weitere Klimaanlage 104 dargestellt, bei der eine Verschaltung des Thermospeichers 6 räumlich getrennt vom Kältemittelsammler 7 erfolgt ist. Bei einer separaten Anordnung von Thermospeicher 6 und Kältemittelsammler 7 wird das Packaging der Anlage deutlich vereinfacht. Somit wird ein platzsparendes Design erreicht. Der Thermospeicher 6 kann des weiteren auch an einem thermisch unkritischen Einbauort, z.B. außerhalb des Motorraums, untergebracht werden, ohne dass die Kältemittelleitung der Klimaanlage 104 zwischen Verdampfer 5 und Kältemittelsammler 7 unnötig verlängert werden muss.

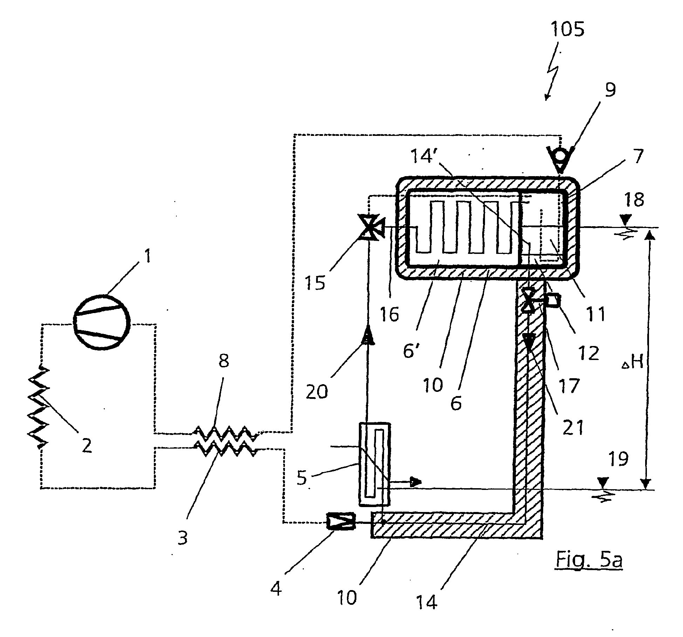

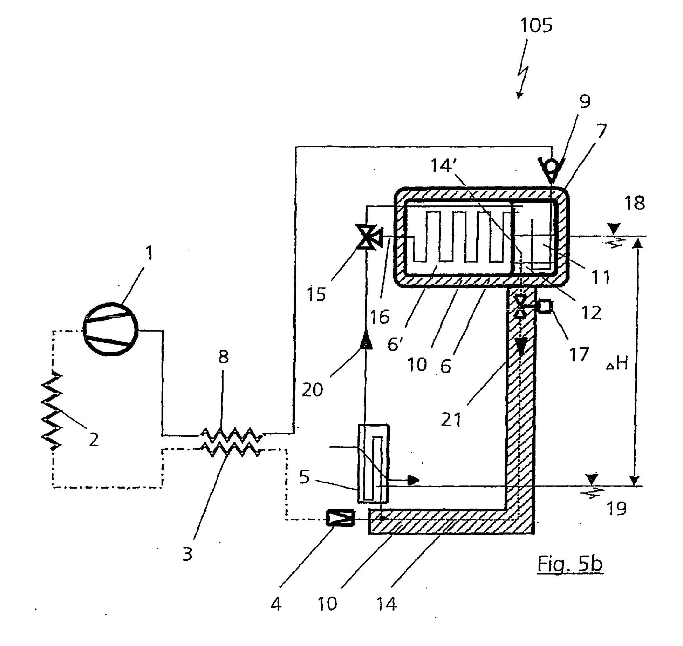

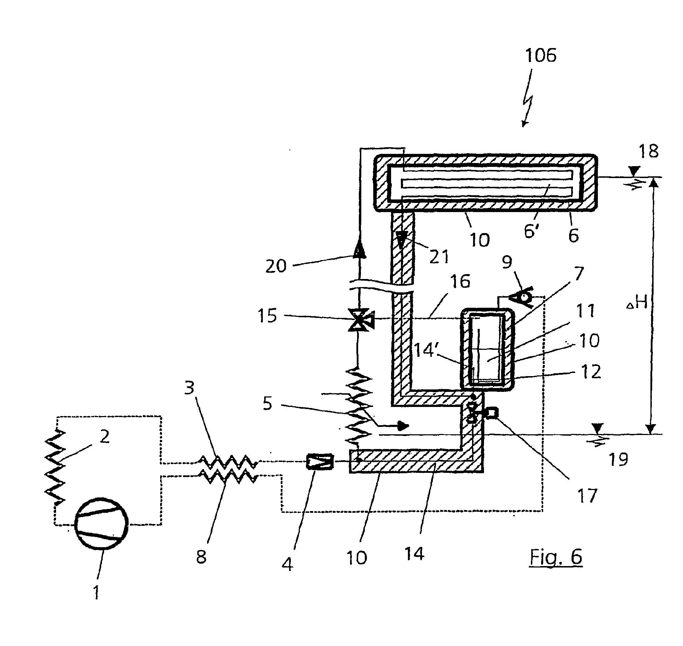

In den Figuren 5a, 5b und 6 sind Kreislaufschaltungen 105, 106 dargestellt, bei denen der Standklimatisierungskreislauf ohne eine Kältemittelumwälzpumpe (Ziffer 13 in den Figuren 1a bis 4) arbeitet. Bei einer derartigen Schaltungsanordnung befindet sich der Verdampfer 5 auf einem geodätisch tieferen Niveau als der Thermospeicher 6, so dass beim Standklimatisierungsbetrieb (Fig. 5a - Kompressionskältekreislauf gestrichelt angedeutet) ein schwerkraftunterstützter Kältemittelkreislauf ohne den Einsatz einer Umwälzpumpe lediglich durch den Thermosyphoneffekt entsteht. Die aus dem Thermospeicher 6 auskoppelbare Kälteleistung wird im wesentlichen durch das treibende Druckgefälle, den Leitungswiderstand im Standklimatisierungskreislauf und durch die Enthalpiedifferenz des Kältemittels 11 bestimmt. Ein großes treibendes. Druckgefälle im Standklimatisierungskreislauf wird durch einen großen Höhenunterschied der beiden Kondensatspiegel 18, 19 im Verdampfer 5 und Thermospeicher 6 und einen großen Dichteunterschied zwischen Dampfstrom 20 und Kondensatstrom 21 des Kältemittels 11 erzielt. Um eine möglichst große Enthalpiedifferenz zu erzielen, ist der Verdampfer 5 in einer Kreuz-Gegenstrombauart ausgeführt, da das Kältemittel 11 quasi bis auf das Temperaturniveau der Luft am Verdampfereintritt überhitzt werden kann. Wie aus den Figuren 5a, 5b, 6 ersichtlich, wurde die Kondensatleitung 14 hier ebenfalls mit einer thermischen Isolierung 10 versehen. Die Kondensatleitung 14 wird durch ein Schaltventil 17 geschlossen, das nur im Standklimatisierungsbetrieb geöffnet ist.

Bei der Kreislaufschaltung 106 in Fig. 6 ist der Thermospeicher 6 getrennt vom Kältemittelsammler 7 angeordnet (vgl. Fig. 4), wodurch der Thermospeicher 6 räumlich weit entfernt von der restlichen Kälteanlage angeordnet und mit einem großen Wärmespeichervermögen versehen werden kann. Bei einer separaten Anordnung von Thermospeicher 6 und Kältemittelsammler 7 wird das Packaging der Kälteanlage 106 wesentlich vereinfacht. Außerdem kann die Leitungslänge der restlichen Kälteanlage zwischen Verdampfer 5 und Kältemittelsammler 7 kurz gehalten werden um damit Kältemitteldruckverluste gering zu halten.

Die Kreislaufschaltungen 105, 106 gemäß den Figuren 5a, 5b und 6 eignen sich vor allem für Standklimasysteme, bei denen keine hohe Kälteleistung benötigt wird und eine große Differenz der Einbauhöhen zwischen Verdampfer 5 und Thermospeicher 6 realisiert werden kann, damit ein ausreichender Schwerkraft-Kreislauf zustande kommt. Ein mögliches Anwendungsgebiet dieser motorunabhängigen Klimatisierung wären Fernverkehr-Nutzfahrzeuge, bei denen das Fahrerhaus als Arbeits-, Aufenthalts- und Schlafplatz dient und Ruhepausen des Fahrers nach längerer Fahrt gesetzlich vorgeschrieben sind. Mit Hilfe dieser motorunabhängigen Klimatisierung könnte sich der Fahrer vor heißen und feuchten Klimabedingungen schützen. Insbesondere bei Nacht, wenn aufgrund der fehlenden Sonneneinstrahlung der Kältebedarf nicht so hoch ist, würde sich der Schwerkraft unterstützte Klimatisierungskreislauf zur Klimatisierung des Fahrerhauses anbieten. Bei großer erforderlicher Kälteleistung im Stand müsste der Kältemittelkondensatstrom durch eine Umwälzpumpe unterstützt werden.

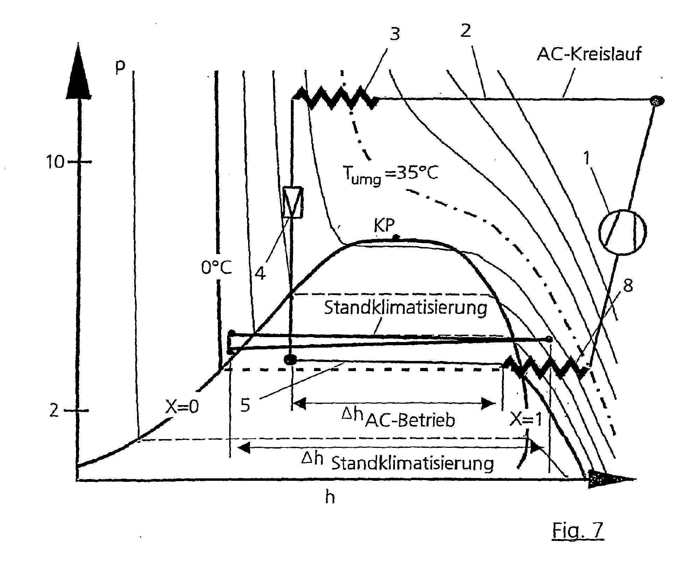

Das in Fig. 7 dargestellte Druck- p/Enthalpie- h -diagramm zeigt exemplarisch die Zustände des Kältemittels CO₂ in einem Kompressionskältekreislauf (A/C-Kreislauf - definiert durch die Bezugsziffern 1 (Verdichter), 2 (Umgebungswärmetauscher), 3 (innerer Wärmetauscher), 4 (Expansionsventil), 5 (Verdampfer) und 8 (innerer Wärmetauscher)) und einem Standklimatisierungskreislauf. Das Diagramm verdeutlicht, dass bei der Standkühlung das Kältemittel im Verdampfer 5 eine ca. 50 % größere Enthalpieänderung erfährt als im A/C-Betrieb. Die Kälteleistung errechnet sich bekanntlich aus dem Produkt von Kältemittelmassenstrom und Enthalpieänderung des Kältemittels. D.h. bei gleicher Kälteleistung am Verdampfer 5, wird bei der Standkühlung ein 50 % kleinerer Kältemittelmassenstrom benötigt. Der Leitungsquerschnitt im Nebenkreis (Kondensatleitung 14) und die Umwälzpumpe 13 können daher entsprechend klein gestaltet werden.

## Patentansprüche

1. Klimaanlage für Kraftfahrzeuge mit einem Kompressionskältekreislauf eines Kältemittels für den A/C-Betrieb mit einem Hochdruckbereich, einem Saugbereich und einem angeschlossenen Standklimatisierungskreislauf, insbesondere für den Standklimatisierungsbetrieb bei ausgeschaltetem Kompressionskältekreislauf mit wenigstens:
- einem Verdichter;
- einem Expansionsventil;
- einem Verdampfer als Kühler für die Abgabe von Kälte an die Umgebung; und
- einem Thermospeicher mit einem Wärmespeichermedium,
wobei der Thermospeicher als Kältespeicher und als Kondensator beim Standklimatisierungsbetrieb dient und wobei das vorhandene Kältemittel als Wärmeträgermedium zur Übertragung der Kälte vom Thermospeicher zum Verdampfer im Standklimatisierungskreislauf dient,
**dadurch gekennzeichnet,**
**dass** der Verdampfer (5) und der Thermospeicher (6) im Kältemittelstrom in Serie geschaltet sind, wobei ein thermisch isolierter Kältemittelsammler (7) vorgesehen ist und wobei beim thermischen Be- und Entladen des Thermospeichers (6) im A/C-Betrieb und/oder im Standklimatisierungsbetrieb die Komponenten kältemittelseitig in der Reihenfolge Verdampfer (5), Thermospeicher (6) und Kältemittelsammler (7) durchströmt werden.

2. Klimaanlage nach Anspruch 1,
**dadurch gekennzeichnet,**
**dass** das Kältemittel (11) Kohlenstoffdioxid (CO₂) ist.

3. Klimaanlage nach Anspruch 1 oder 2,
**dadurch gekennzeichnet,**
**dass** der Transport des Kältemittels (11) im Standklimatisierungskreislauf vom Thermospeicher (6) und/oder vom Kältemittelsammler (7) zum Verdampfer (5) durch eine Umwälzpumpe (13) über eine Kältemittelkondensatleitung (14) erfolgt.

4. Klimaanlage nach Anspruch 1 oder 2,
**dadurch gekennzeichnet,**
**dass** der Transport des Kältemittels (11) im Standklimatisierungskreislauf vom Thermospeicher (6) und/oder vom Kältemittelsammler (7) zum Verdampfer (5) durch den Thermosyphoneffekt über eine vorzugsweise mit einem Schaltventil (17) schließbare Kältemittelkondensatleitung (14) erfolgt, wobei der Verdampfer (5) auf einem geodätisch tieferen Niveau als der Thermospeicher (6) und/oder der Kältemittelsammler (7) angeordnet ist.

5. Klimaanlage nach Anspruch 3,
**dadurch gekennzeichnet,**
**dass** der Kältemittelsammler (7) im Standklimatisierungskreislauf und/oder kältemittelseitig nach dem Thermospeicher (6) und vor der Umwälzpumpe (13) und/oder dem Verdampfer (5) angeordnet ist.

6. Klimaanlage nach Anspruch 3, 4 oder 5,
**dadurch gekennzeichnet,**
**dass** der Thermospeicher (6) und/oder die Kältemittelkondensatleitung (14) thermisch isoliert sind.

7. Klimaanlage nach einem der Ansprüche 3 bis 6,
**dadurch gekennzeichnet,**
**dass** die Öffnung (14') der Kältemittelkondensatleitung (14) nur so tief in den Kältemittelsammler (7) hineinragt, dass die Umwälzpumpe (13) und/oder der Thermosyphoneffekt lediglich flüssiges Kältemittel (11) ansaugen.

8. Klimaanlage nach einem der Ansprüche 1 bis 7,
**dadurch gekennzeichnet,**
**dass** im Standklimatisierungsbetrieb ein Rückschlagventil (9) verhindert, dass Kältemittel (11) aus dem Hochdruckbereich in den Leistungsabschnitt mit dem Verdampfer (5) und dem Kältemittelsammler (7) eindringt.

9. Klimaanlage nach Anspruch 8,
**dadurch gekennzeichnet,**
**dass** die Umwälzpumpe (13) und/oder das Rückschlagventil (9) in den Thermospeicher (6) und/oder in den Kältemittelsammler (7) integriert sind.

10. Klimaanlage nach einem der Ansprüche 1 bis 9,
**dadurch gekennzeichnet,**
**dass** der Thermospeicher (6) und der Kältemittelsammler (7) integriert sind.

11. Klimaanlage nach einem der Ansprüche 1 bis 10,
**dadurch gekennzeichnet,**
**dass** der Thermospeicher (6) den Kältemitteleammler (7) umhüllt.

12. Klimaanlage nach einem der Ansprüche 1 bis 9,
**dadurch gekennzeichnet,**
**dass** der Thermospeicher (6) und der Kältemittelsammler (7) separat angeordnet sind.

13. Klimaanlage nach einem der Ansprüche 1 bis 12,
**dadurch gekennzeichnet,**
**dass** der Thermospeicher (6) und insbesondere die Beladung mit Kälte im A/C-Betrieb bei laufendem Kompressionskältekreislauf durch ein elektrisches oder thermodynamisches Bypass-Ventil (15) mit einer Bypassleitung (16) umgehbar ist.

14. Klimaanlage nach einem der Ansprüche 1 bis 13,
**dadurch gekennzeichnet,**
**dass** das Wärmespeichermedium (6') im Thermospeicher (6) eine Phasenumwandlung zwischen fester und flüssiger Phase erfährt.

15. Klimaanlage nach einem der Ansprüche 1 bis 14,
**dadurch gekennzeichnet,**
**dass** der Verdampfer (5) in Kreuz-Gegenstrombauart ausgeführt ist.

16. Klimaanlage nach einem der Ansprüche 1 bis 15,
**dadurch gekennzeichnet,**
**dass** insbesondere bei mit Kälte beladenem Thermospeicher (6) der Kompressionskältekreislauf und der Standklimatisierungskreislauf parallel betreibbar sind.

## Claims

1. Air-conditioning installation for motor vehicles, having a compression refrigeration circuit of a refrigerant for A/C operation with a high-pressure region, a suction region and a connected stationary air-conditioning circuit, in particular for stationary air-conditioning operation when the compression refrigeration circuit is switched off, at least having:
- a compressor;
- an expansion valve;
- an evaporator as cooler for releasing refrigeration to the environment; and
- a thermal accumulator comprising a heat storage medium,
the thermal accumulator serving as a refrigeration accumulator and as a condenser during stationary air-conditioning operation, and the refrigerant which is present as heat transfer medium being used to transfer the refrigeration from the thermal accumulator to the evaporator in the stationary air-conditioning circuit,
**characterized in that** the evaporator (5) and the thermal accumulator (6) are connected in series in terms of the flow of refrigerant, a thermally insulated refrigerant collector (7) being provided, and, during thermal loading and unloading of the thermal accumulator (6) in A/C operation and/or stationary air-conditioning operation, the refrigerant flowing through the components in the following order: evaporator (5), thermal accumulator (6) and refrigerant collector (7).

2. Air-conditioning installation according to Claim 1, **characterized in that** the refrigerant (11) is carbon dioxide (CO₂).

3. Air-conditioning installation according to Claim 1 or 2, **characterized in that** the refrigerant (11) is transported from the thermal accumulator (6) and/or from the refrigerant collector (7) to the evaporator (5) in the stationary air-conditioning circuit by a circulation pump (13) via a refrigerant condensate line (14).

4. Air-conditioning installation according to Claim 1 or 2, **characterized in that** the refrigerant (11) in the stationary air-conditioning circuit is transported from the thermal accumulator (6) and/or from the refrigerant collector (7) to the evaporator (5) by the thermosiphon effect via a refrigerant condensate line (14), which can preferably be closed by a switching valve (17), the evaporator (5) being arranged at a geodetically lower level than the thermal accumulator (6) and/or the refrigerant collector (7).

5. Air-conditioning installation according to Claim 3, **characterized in that** the refrigerant accumulator (7) in the stationary air-conditioning circuit and/or on the refrigerant side is arranged downstream of the thermal accumulator (6) and upstream of the circulation pump (13) and/or the evaporator (5).

6. Air-conditioning installation according to Claim 3, 4 or 5, **characterized in that** the thermal accumulator (6) and/or the refrigerant condensate line (14) are thermally insulated.

7. Air-conditioning installation according to one of Claims 3 to 6, **characterized in that** the opening (14') of the refrigerant condensate line (14) only projects into the refrigerant collector (17) to a depth such that the circulation pump (13) and/or the thermosiphon effect only suck(s) in liquid refrigerant (11).

8. Air-conditioning installation according to one of Claims 1 to 7, **characterized in that** in stationary air-conditioning operation a non-return valve (9) prevents refrigerant (11) from penetrating out of the high-pressure region into the power section comprising the evaporator (5) and the refrigerant collector (7).

9. Air-conditioning installation according to Claim 8, **characterized in that** the circulation pump (13) and/or the non-return valve (9) are integrated in the thermal accumulator (6) and/or the refrigerant collector (7).

10. Air-conditioning installation according to one of Claims 1 to 9, **characterized in that** the thermal accumulator (6) and the refrigerant collector (7) are integrated with one another.

11. Air-conditioning installation according to one of Claims 1 to 10, **characterized in that** the thermal accumulator (6) surrounds the refrigerant collector (7).

12. Air-conditioning installation according to one of Claims 1 to 9, **characterized in that** the thermal accumulator (6) and the refrigerant collector (7) are arranged separately.

13. Air-conditioning installation according to one of Claims 1 to 12, **characterized in that** the thermal accumulator (6) and in particular the loading with refrigeration in A/C operation when the compression refrigeration circuit is running can be bypassed by an electrical or thermodynamic bypass valve (15) with a bypass line (16).

14. Air-conditioning installation according to one of Claims 1 to 13, **characterized in that** the heat storage medium (6') in the thermal accumulator (6) undergoes a phase change between the solid and liquid phase.

15. Air-conditioning installation according to one of Claims 1 to 14, **characterized in that** the evaporator (5) is of cross-countercurrent design.

16. Air-conditioning installation according to one of Claims 1 to 15, **characterized in that**, in particular when the thermal accumulator (6) is laden with refrigeration, the compression refrigeration circuit and the stationary air-conditioning circuit can be operated in parallel.

## Revendications

1. Installation de climatisation pour véhicules automobiles comprenant un circuit réfrigérant à compression d'un réfrigérant pour l'exploitation A/C avec une plage de haute pression, une zone d'aspiration et un circuit de climatisation verticale raccordé, en particulier pour l'exploitation de climatisation verticale avec un circuit réfrigérant à compression déconnecté comprenant au moins :
- un compresseur ;
- une vanne d'expansion ;
- un évaporateur comme refroidisseur pour l'envoi de froid dans l'environnement ; et
- un accumulateur thermique avec un fluide accumulateur de chaleur,
l'accumulateur thermique servant d'accumulateur de froid et de condensateur dans le mode de climatisation verticale et le réfrigérant présent servant de fluide caloporteur pour la transmission du froid de l'accumulateur thermique à l'évaporateur dans le circuit de climatisation verticale,
**caractérisée en ce que**
l'évaporateur (5) et l'accumulateur thermique (6) sont montés en série dans le fluide réfrigérant, un collecteur de réfrigérant (7) isolé thermiquement étant prévu et les composants étant traversés côté réfrigérant dans l'ordre de succession évaporateur (5), accumulateur thermique (6) et collecteur de réfrigérant (7) lors du chargement et du déchargement thermique de l'accumulateur thermique (6) en mode A/C et/ou dans le mode climatisation verticale.

2. Installation de climatisation selon la revendication 1,
**caractérisée en ce que**
le réfrigérant (11) est du dioxyde de carbone (CO₂).

3. Installation de climatisation selon la revendication 1 ou 2,
**caractérisée en ce que**,
le transport du réfrigérant (11) dans le circuit de climatisation verticale de l'accumulateur (6) et/ou du collecteur de réfrigérant (7) à l'évaporateur (5) s'effectue par une pompe à recirculation (13) au moyen d'une conduite à condensat de réfrigérant (14).

4. Installation de climatisation selon la revendication 1 ou 2,
**caractérisée en ce que**
le transport du réfrigérant (11) dans le circuit de climatisation verticale de l'accumulateur thermique (6) et/ou du collecteur de réfrigérant (7) à l'évaporateur (5) s'effectue par l'effet de thermosiphon au moyen d'une conduite à condensat de réfrigérant (14) pouvant être fermée de préférence avec une vanne de commutation (17), l'évaporateur (5) étant disposé sur un niveau plus bas au niveau géodésique que l'accumulateur thermique (6) et/ou que le collecteur de réfrigérant (7).

5. Installation de climatisation selon la revendication 3,
**caractérisée en ce que**
le collecteur de réfrigérant (7) est disposé dans le circuit de climatisation verticale et/ou côté réfrigérant après l'accumulateur thermique (6) et avant la pompe à recirculation (13) et/ou l'évaporateur (5).

6. Installation de climatisation selon la revendication 3, 4 ou 5,
**caractérisée en ce que**
l'accumulateur thermique (6) et/ou la conduite à condensat de réfrigérant sont isolés thermiquement.

7. Installation de climatisation selon l'une quelconque des revendications 3 à 6,
**caractérisée en ce**
l'ouverture (14') de la conduite à condensat de réfrigérant dépasse à l'intérieur du collecteur de réfrigérant (7) juste suffisamment profondément pour que la pompe à recirculation (13) et/ou l'effet de thermosiphon aspirent uniquement du réfrigérant (11) liquide.

8. Installation de climatisation selon l'une quelconque des revendications 1 à 7,
**caractérisée en ce que**
dans le mode de climatisation verticale, un clapet anti-retour (9) empêche que du réfrigérant (11) sortant de la zone de haute pression pénètre dans la section de puissance avec l'évaporateur (5) et le collecteur de réfrigérant (7).

9. Installation de climatisation selon la revendication 8,
**caractérisée en ce que**
la pompe à recirculation (13) et/ou le clapet anti-retour (9) sont intégrés dans l'accumulateur thermique (6) et/ou dans le collecteur de réfrigérant (7).

10. Installation de climatisation selon l'une quelconque des revendications 1 à 9,
**caractérisée en ce que**
l'accumulateur thermique (6) et le collecteur de réfrigérant (7) sont intégrés.

11. Installation de climatisation selon l'une quelconque des revendications 1 à 10,
**caractérisée en ce que**
l'accumulateur thermique (6) enveloppe le collecteur de réfrigérant (7).

12. Installation de climatisation selon l'une quelconque des revendications 1 à 9,
**caractérisée en ce que**
l'accumulateur thermique (6) et le collecteur de réfrigérant (7) sont disposés de façon séparée.

13. Installation de climatisation selon l'une quelconque des revendications 1 à 12,
**caractérisée en ce que**
l'accumulateur thermique (6) et en particulier la charge avec du froid en mode A/C peuvent être contournés, dans le cas d'un circuit réfrigérant à compression en fonctionnement, par une dérivation (15) électrique ou thermodynamique avec une conduite de dérivation (16).

14. Installation de climatisation selon l'une quelconque des revendications 1 à 13,
**caractérisée en ce que**
le milieu accumulateur de chaleur (6') subit dans l'accumulateur thermique (6) une conversion de phase entre la face solide et la face liquide.

15. Installation de climatisation selon l'une quelconque des revendications 1 à 14,
**caractérisée en ce que**
l'évaporateur (5) est réalisé dans une conception de contre-flux croisé.

16. Installation de climatisation selon l'une quelconque des revendications 1 à 15,
**caractérisée en ce que**
le circuit réfrigérant à compression et le circuit de climatisation verticale peuvent être exploités en parallèle en particulier dans le cas d'un accumulateur thermique (6) chargé avec du froid.
